# EUROPÄISCHE PATENTANMELDUNG

(11) **EP 4 019 436 A1**
(43) Veröffentlichungstag der Anmeldung: **29.06.2022**
(21) Anmeldenummer: 21214058.6
(22) Anmeldetag: 13.12.2021
(51) Int. Cl.: B65G 15/34, B65G 23/04, B65G 43/06, B65G 43/02

(54) **VERFAHREN ZUM BETRIEB EINER FÖRDERBANDANLAGE**

(30) Priorität: 22.12.2020 DE 102020216501
(71) Anmelder: ContiTech Transportbandsysteme GmbH, 30165 Hannover (DE)
(72) Erfinder: Raffler, Patrick, 30165 Hannover (DE); Schiller, Dustin, 30165 Hannover (DE); Wennekamp, Tobias, 30165 Hannover (DE)
(74) Vertreter: Continental Corporation

(57) **Zusammenfassung**

Die vorliegende Erfindung betrifft ein Verfahren zum Betrieb einer Förderbandanlage (1) mit einem Förderband (10), welches ein elastomeres Material aufweist, in welches wenigstens in einer Förderrichtung (A) verlaufende Zugträger (11) eingebettet sind, und mit wenigstens einer Antriebstrommel (12), welche ausgebildet ist, das Förder-band (10) in der Förderrichtung (A) anzutreiben, mit wenigstens den Schritten:
• Erfassen (100) eines Leistungsbedarfs der Antriebstrommel (12),
• Ermitteln (300) einer Änderung des aktuellen Leistungsbedarfs der Antriebstrommel (12) über eine vorbestimmte unmittelbar zurückliegende Zeitdauer,
• Vergleichen (400) der ermittelten Änderung des aktuellen Leistungsbedarfs der Antriebstrommel (12) mit einer vorbestimmten Änderung und
• bei Überschreiten eines vorbestimmten Schwellwerts, Anhalten (500) der Antriebstrommel (12).

## Beschreibung

Die vorliegende Erfindung betrifft ein Verfahren zum Betrieb einer Förderbandanlage gemäß dem Patentanspruch 1, eine Förderbandanlage gemäß dem Patentanspruch 4 sowie eine Steuerungseinheit zur Durchführung eines derartigen Verfahrens gemäß dem Patentanspruch 5.

Zum Transport von insbesondere losem Fördergut wie zum Beispiel Schüttgut wie zum Beispiel in Form von Steinen, Erz, Kohle, Getreide, Granulat und dergleichen im Bergbau, in der Industrie und auf den Transportwegen werden häufig Förderbänder eingesetzt, welche auch als Transportbänder bezeichnet werden können. Derartige Förderbänder werden endlos geschlossen in einer Förderbandanlage bzw. in einer Transportbandanlage verwendet. Die Förderbänder bestehen üblicherweise zumindest im Wesentlichen aus einem flexiblen Material wie zum Beispiel aus einem elastomeren Material wie zum Beispiel aus vulkanisiertem Kautschuk, auch Gummi genannt, in welches in der Zugrichtung, Transportrichtung bzw. Bewegungsrichtung verlaufend Zugträger bzw. Festigkeitsträger zur Übertragung der Zugkräfte eingebettet sind. Derartige Zugträger können bei Förderbändern sein, welche vergleichsweise große bzw. schwere Lasten zu fördern haben, insbesondere Stahlseile sein.

Ebenso sind Förderbänder bekannt, welche für kleinere Anwendungen geeignet sind und textile Flächengebilde als Zugträger aufweisen. Derartige Anwendungen können ebenfalls lose Fördergüter fördern.

In jedem Fall erstrecken sich derartige Förderanlagen, welche auch als Förderer bezeichnet werden können, üblicherweise zumindest im Wesentlichen in der horizontalen Ebene, sodass die einzelnen Komponenten bzw. Anlagenteile der Förderanlage auf einem Untergrund angeordnet sind. Zu den Komponenten einer Förderanlage, welche auch als Anlagenteile bezeichnet werden können, gehört üblicherweise wenigstens eine Antriebstrommel, welche mittels eines Antriebs rotatorisch betrieben werden kann, und am gegenüberliegenden Ende der Förderanlage wenigstens eine Umlenkrolle. Das Förderband wird endlos geschlossen und gespannt um die Antriebstrommel und um die Umlenkrolle gelegt, sodass der obere Bereich des Förderbandes, welcher auch als Obertrum bezeichnet werden kann, mittels des Antriebs der Antriebstrommel in die eine Richtung und der untere Bereich des Förderbandes, welcher auch als Untertrum bezeichnet werden kann, in die entgegengesetzte Richtung bewegt werden kann.

Zwischen der Antriebstrommel und der Umlenkrolle werden üblicherweise zahlreiche Laufrollen angeordnet, welche das Obertrum bzw. das Untertrum des Förderbandes in der vertikalen Richtung von unten abstützen. Derartige Laufrollen können auch als Tragrollen bezeichnet werden. Üblicherweise werden beim Obertrum des Förderbandes in der Querrichtung mehrere und insbesondere drei Laufrollen nebeneinander angeordnet und dabei die äußeren Laufrollen zur horizontalen Ebene schräg gestellt. Hierdurch ergibt sich eine gemuldete Form des Obertrums des Förderbandes, sodass das lose Schüttgut in der Querrichtung seitlich in einem gewissen Maße auf der Oberfläche der Oberseite des Förderbandes gehalten werden kann.

Da derartige Fördergüter häufig spitz und scharfkantig ausgebildet sind, können diese Fördergüter beim Transport und insbesondere durch ihr Aufschlagen auf der Oberfläche der Oberseite des Förderbandes an dessen Aufgabestelle dort zu Beschädigungen des flexiblen Materials des Förderbandes führen. Hierdurch kann das elastomere Material des Förderbandes punktuell abgetragen und hierdurch geschwächt werden. Es kann sogar zu Durchbrüchen bis zur Unterseite des Förderbandes kommen. Zunehmende Beschädigungen können dabei bis zu den Zugträgern reichen und auch diese beschädigen. Durch derartige Beschädigungen können auch die Zugträger in der Längsrichtung durchtrennt werden. Auch können die Zugträger als Stahlseile durch Korrosion beschädigt werden, wenn das flexible Material die Zugträger nicht mehr vor äußeren Einflüssen wie zum Beispiel Witterungseinflüssen wie zum Beispiel vor Feuchtigkeit schützen kann. Vergleichbares gilt für textile Zugträger.

Derartige Beschädigungen können zum Beispiel durch ein Zerreißen des Förderbands in der Querrichtung und bzw. oder durch sich in der Längsrichtung erstreckende Schlitze durch das flexible Material des Förderbandes hindurch zu einem Ausfall der Förderanlage führen. Dies kann zu einem Verlust des Fördergutes, welches sich zu diesem Zeitpunkt auf dem Obertrum des Förderbandes befindet, sowie zu entsprechenden Umweltschäden führen. Auch kann die Anschaffung und Montage eines neuen Förderbandes Aufwand und Kosten verursachen. Insbesondere können aber durch den Stillstand der Förderanlage und gegebenenfalls ein hierdurch verursachten Stillstand zum Beispiel der gesamten Mine, der gesamten Produktionsanlage, des gesamten Hafenterminals, des gesamten Güterbahnhofs und dergleichen sehr hohe Kosten durch den Ausfall der entsprechenden Produktions- bzw. Transportkapazitäten entstehen. Zu beachten ist ferner, dass derartige Förderbänder üblicherweise über einen längeren Zeitraum segmentweise hergestellt, an den Einsatzort transportiert und dort endlos geschlossen werden müssen, was einen entsprechenden zeitlichen Vorlauf bzw. Zeitbedarf erfordert.

Zur Überwachung derartige Förderbänder auf Beschädigungen und insbesondere auf Längsschlitze ist es daher bekannt, Verfahren und Vorrichtungen zur Überwachung zu verwenden, welche selbsttätig und möglichst frühzeitig eine derartige Beschädigung und insbesondere einen Längsschlitz erkennen und zum Beispiel durch ein Anhalten des Förderbandes hierauf reagieren können, um weitere Beschädigungen bzw. eine Vergrößerung der Beschädigung zu vermeiden.

Hierzu können Leiterschleifen, Transponder und dergleichen in die Deckplatte des Förderbandes eingebettet und von außerhalb des Förderbandes seitens der Förderbandanlage detektiert werden. Aus der Abwesenheit einer erwarteten Leiterschleife kann dann auf eine Beschädigung an dieser Stelle geschlossen werden. Derartige Vorrichtungen und Verfahren sind beispielsweise aus der DE 196 43 997 A1, aus der DE 197 21 916 A1, aus der DE 199 02 508 A1 oder aus der EP 0 753 472 A1 bekannt.

Nachteilig an der Verwendung von Leiterschleifen, Transponder und dergleichen wie zuvor beschrieben ist, dass diese Bauteile in die Deckschicht bzw. in die Deckplatte des Förderbandes eingebettet und dort vulkanisiert werden müssen. Aufgrund der Größe dieser Bauteile ist hierzu üblicherweise eine minimale Dicke von ca. 5 mm bis ca. 6 mm der Deckplatte erforderlich, um die Bauteile dort vollständig einbetten zu können. Somit können derartige Vorrichtungen und Verfahren nicht bei Förderbändern angewendet werden, welche vergleichsweise dünne Deckplatten besitzen. Derartige Förderbänder können somit auf diese Art und Weise nicht auf Beschädigungen und insbesondere auf Längsschlitze wie zuvor beschrieben überwacht werden.

Ein weiterer Nachteil bei der Verwendung von Leiterschleifen allgemein ist, dass diese je nach Betriebsbedingungen nur eine begrenzte Lebensdauer haben, so dass nach einer gewissen Zeit die Leiterschleifen ausgetauscht werden müssen oder nicht mehr zur Überwachung verwendet werden können, d.h. auch ohne Beschädigungen nicht mehr detektiert werden können.

Eine Aufgabe der vorliegenden Erfindung ist es, ein Verfahren und bzw. oder eine Vorrichtung zur Überwachung einer Förderanlage, insbesondere mit vergleichsweise dünnen Förderbändern, bereitzustellen. Insbesondere soll die Überwachung des Förderbandes auf Längsschlitze ermöglicht werden. Insbesondere soll die Überwachung des Förderbandes möglichst einfach, kostengünstig, bauraumsparend und bzw. oder langlebig erfolgen können.

Zumindest soll eine Alternative zu bekannten Möglichkeiten zur Überwachung von Förderanlagen, insbesondere mit vergleichsweise dünnen Förderbändern, bereitgestellt werden.

Die Aufgabe wird erfindungsgemäß durch ein Verfahren mit den Merkmalen gemäß Patentanspruch 1, durch eine Förderbandanlage mit den Merkmalen gemäß Patentanspruchs 4 sowie durch eine Steuerungseinheit mit den Merkmalen gemäß Anspruch 5 gelöst. Vorteilhafte Weiterbildungen sind in den Unteransprüchen beschrieben.

Somit betrifft die vorliegende Erfindung ein Verfahren zum Betrieb einer Förderbandanlage mit einem Förderband, welches ein elastomeres Material aufweist, in welches wenigstens in einer Förderrichtung verlaufende Zugträger eingebettet sind, und mit wenigstens einer Antriebstrommel, welche ausgebildet ist, das Förderband in der Förderrichtung anzutreiben, mit wenigstens den Schritten:
- Erfassen eines Leistungsbedarfs der Antriebstrommel,
- Ermitteln einer Änderung des aktuellen Leistungsbedarfs der Antriebstrommel über eine vorbestimmte unmittelbar zurückliegende Zeitdauer,
- Vergleichen der ermittelten Änderung des aktuellen Leistungsbedarfs der Antriebstrommel mit einer vorbestimmten Änderung und
- bei Überschreiten eines vorbestimmten Schwellwerts, Anhalten der Antriebstrommel.

Das Förderband kann als elastomeres Material insbesondere vulkanisierten Kautschuk aufweisen, in welchen in der Längsrichtung als Zugrichtung bzw. als Bewegungsrichtung die Zugträger eingebettet sind, welche auch als Festigkeitsträger bezeichnet werden können. Grundsätzlich können derartige Zugträger zum Beispiel Stahlseile und dergleichen sein. Vorzugsweise richtet sich die vorliegende Erfindung jedoch auf Förderbänder mit textilen Zugträgern zum Beispiel in Form von flächigen Geweben, welche aufgrund ihres vergleichsweise dünnen Aufbaus nicht zur Einbettung von Leiterschleifen, Transponder und dergleichen geeignet sind, wie eingangs beschrieben, und daher erfindungsgemäß auf eine alternative Art und Weise auf Beschädigungen und insbesondere auf Längsschlitze überwacht werden können.

Der vorliegenden Erfindung liegt dabei die Erkenntnis zugrunde, dass Beschädigungen des Förderbandes sowie der Förderanlage selbst den Leistungsbedarf der Antriebstrommel erhöhen können. Beispielsweise kann eine festgefahrene Tragrolle, eine beschädigte Lagerung einer Tragrolle oder dergleichen zu einem erhöhten Widerstand des Förderbandes führen, wodurch auch der Leistungsbedarf der Antriebstrommel bzw. dessen Antriebs steigen kann, was erfindungsgemäß erkannt werden kann. Ebenso kann eine Beschädigung des Förderbandes und insbesondere ein Längsschlitz des Förderbandes den Widerstand des Förderbandes in der Bewegung erhöhen, wodurch ebenfalls der Leistungsbedarf der Antriebstrommel ansteigen kann, was erfindungsgemäß erkannt werden kann. Dies kann insbesondere sprunghaft und somit sehr deutlich, einfach bzw. verlässlich erkennbar erfolgen.

Erfindungsgemäß wird daher der Leistungsbedarf der Antriebstrommel regelmäßig oder sogar fortlaufend erfasst, was durch zusätzliche Sensoren oder durch die Auswertung bereits vorhandener Größen der Antriebstrommel bzw. dessen elektrischen Antriebs erfolgen kann. In jedem Fall kann dies beispielsweise von einer Steuerungseinheit der Förderbandanlage ausgeführt werden.

Somit kann eine Antriebstrommel einer Förderbandanlage dann angehalten werden, falls eine unzulässig hohe bzw. starke Zunahme des Leistungsbedarfs der Antriebstrommel erkannt wird. Hieraus kann auf eine Beschädigung des Förderbandes geschlossen und hierauf reagiert werden. Diese unzulässig hohe bzw. starke Zunahme des Leistungsbedarfs der Antriebstrommel kann insbesondere aus einer entsprechend deutlichen Zunahme eines zeitlichen Verlaufs des Leistungsbedarfs der Antriebstrommel oder aus dem Maß der Änderung als Steigung des Leistungsbedarfs der Antriebstrommel bestimmt und mit einem entsprechenden Schwellwert verglichen werden.

In jedem Fall kann auf diese Art und Weise berücksichtigt bzw. ausgenutzt werden, dass üblicherweise zulässige Änderungen der benötigten Antriebsleistung stetig und über einen längeren Zeitraum, z.B. wenn die Beladung gestartet wird und die Förderanlage "langsam vollläuft" oder wenn Komponenten über einen langen Zeitraum verschleißen und damit langsam die benötigte Leistung erhöhen, auftreten. Diese Änderungen der benötigten Antriebsleistung können somit von einer Beschädigung unterschieden werden, welche üblicherweise zu einen unmittelbaren, d.h. sprunghaften, Anstieg der Antriebsleitung führt. Entsprechend kurz kann die vorbestimmte unmittelbar zurückliegende Zeitdauer gewählt werden.

Gemäß einem Aspekt der Erfindung erfolgt das Ermitteln einer Änderung des aktuellen Leistungsbedarfs der Antriebstrommel aus einem erfassten zeitlichen Verlauf des Leistungsbedarfs der Antriebstrommel. Hierzu kann der zeitliche Verlauf der Antriebsleistung erfasst und im zeitlichen Verlauf der Antriebsleistung ein signifikanter Anstieg erkannt bzw. als Hinweis auf eine Beschädigung des Förderbandes und bzw. oder der Förderanlage gewertet werden.

Gemäß einem weiteren Aspekt der Erfindung erfolgt das Ermitteln einer Änderung des aktuellen Leistungsbedarfs der Antriebstrommel als Steigung des Leistungsbedarfs der Antriebstrommel. Dies kann eine Alternative darstellen, das zuvor beschriebene erfindungsgemäße Verfahren umzusetzen.

Gemäß einem weiteren Aspekt der Erfindung weisen die Zugträger ein textiles Material auf, bestehen vorzugsweise aus einem textilen Material. Das erfindungsgemäße Verfahren kann auf diese Art und Weise insbesondere auf Förderbänder mit textilen Zugträgern angewendet werden, da derartige Förderbänder aufgrund ihrer vergleichsweise geringen Dicke üblicherweise nicht zur Verwendung von Leiterschleifen, Transponder und dergleichen geeignet sind. Erfindungsgemäß kann dennoch wie zuvor beschrieben eine Überwachung derartiger Förderbandanlagen und bzw. oder derartiger Förderbänder erfolgen.

Die vorliegende Erfindung betrifft auch Förderbandanlage mit einem Förderband, welches ein elastomeres Material aufweist, in welches wenigstens in einer Förderrichtung verlaufende Festigkeitsträger eingebettet sind, und mit wenigstens einer Antriebstrommel, welche ausgebildet ist, das Förderband in der Förderrichtung anzutreiben, wobei die Förderbandanlage, vorzugsweise eine Steuerungseinheit der Förderbandanlage, ausgebildet ist, einen Leistungsbedarf der Antriebstrommel zu erfassen, eine Änderung des aktuellen Leistungsbedarfs der Antriebstrommel über eine vorbestimmte unmittelbar zurückliegende Zeitdauer zu ermitteln, die ermittelte Änderung des aktuellen Leistungsbedarfs der Antriebstrommel mit einer vorbestimmten Änderung zu vergleichen und bei Überschreiten eines vorbestimmten Schwellwerts die Antriebstrommel anzuhalten.

Auf diese Art und Weise können die zuvor beschriebenen Eigenschaften und Vorteile eines derartigen alternativen erfindungsgemäßen Verfahrens bei einer entsprechenden Förderbandanlage umgesetzt und angewendet werden.

Die vorliegende Erfindung betrifft auch eine Steuerungseinheit zur Durchführung eines Verfahrens wie zuvor beschrieben. Hierdurch kann eine Steuerungsvorrichtung geschaffen werden, um ein erfindungsgemäßes Verfahren auszuführen. Eine derartige Steuerungsvorrichtung kann beispielsweise bei der zuvor beschriebenen erfindungsgemäßen Förderbandanlage verwendet werden.

Ein Ausführungsbeispiel und weitere Vorteile der Erfindung werden nachstehend im Zusammenhang mit den folgenden Figuren erläutert. Darin zeigt:

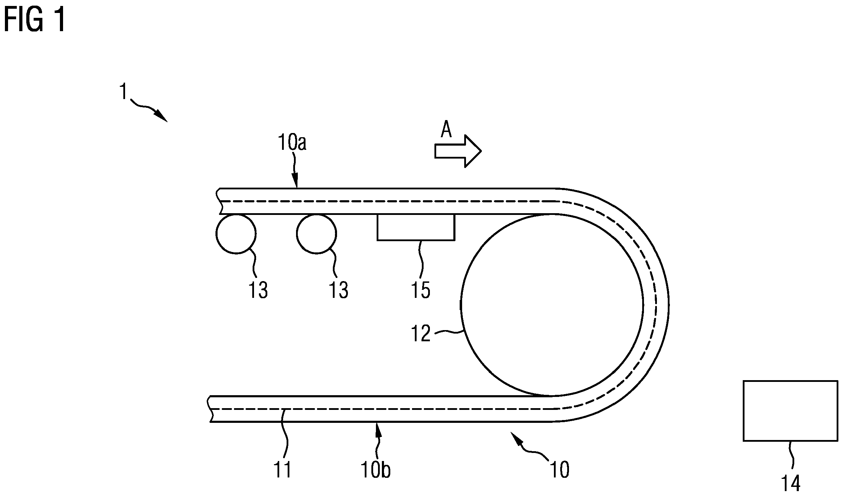

- Fig. 1: eine schematische seitliche Darstellung einer erfindungsgemäßen Förderbandanlage mit einer erfindungsgemäßen Steuerungseinheit; und

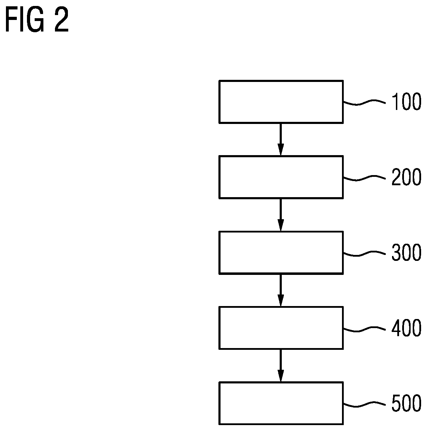

- Fig. 2: ein Ablaufdiagramm eines erfindungsgemäßer Verfahrens.

Eine erfindungsgemäße Förderbandanlage 1 weist ein Förderband 10 auf, welches in einer Förderrichtung A endlos geschlossen ist und im Wesentlichen aus einem elastomeren Material besteht, in welches Zugträger 11 als Festigkeitsträger 11 eingebettet sind. Die Zugträger 11 können Stahlseile 11 oder, wie im vorliegenden Ausflugsbeispiel betrachtet, ein Gewebe 11 sein. In jedem Fall verlaufen die Zugträger 11 in der Förderrichtung A, welche auch als Laufrichtung A oder als Bewegungsrichtung A bezeichnet werden kann. Das Förderband 10 bildet im oberen Bereich der Förderbandanlage 1 ein Obertrum 10a, auf welchem ein Fördergut (nicht dargestellt) insbesondere als loses Schüttgut transportiert werden kann, und ein Untertrum 10b, welches frei von Fördergut ist.

Das Förderband 10 wird im Bereich des Obertrums 10a von Stützrollen 13 gestützt. Das Förderband 10 läuft an seinen Enden auf der einen Seite um eine Umlenkrolle (nicht dargestellt) und auf der anderen Seite um eine Antriebstrommel 12. Ein Antrieb (nicht dargestellt) der Antriebstrommel 12 kann von einer Steuerungseinheit 14 gesteuert bzw. betrieben werden. Auch kann die Steuerungseinheit 14 der Bedarf an elektrischer Energie der Antriebstrommel 12 bzw. dessen Antriebs sensorisch erfassen oder aus anderen Größen berechnen. Es ist ferner ein Beladungssensor 15 im Bereich des Obertrums 10a angeordnet, sodass das Gewicht des Förderguts sensorisch erfasst und der Steuerungseinheit 14 zur Verfügung gestellt werden kann.

Auf der erfindungsgemäße Förderbandanlage 1 bzw. dessen erfindungsgemäßen Steuerungseinheit 14 kann ein erfindungsgemäßes Verfahren wie folgt ausgeführt werden:
Es erfolgt ein Erfassen 100 des aktuellen Leistungsbedarfs der Antriebstrommel 12 bzw. dessen Antriebs seitens der Steuerungseinheit 14. Es erfolgt ferner ein Erfassen 200 einer Beladung des Förderbandes 10 mittels des Beladungssensors 15, wobei die erfasste Beladung bzw. dessen Gewicht der Steuerungseinheit 14 zur Verfügung gestellt wird. Seitens der Steuerungseinheit 14 erfolgt nun ein Ermitteln 300 der Änderung des aktuellen Leistungsbedarfs der Antriebstrommel 12 über eine vorbestimmte unmittelbar zurückliegende Zeitdauer. Dann erfolgt seitens der Steuerungseinheit 14 ein Vergleichen 400 der ermittelten Änderung des aktuellen Leistungsbedarfs der Antriebstrommel 12 mit vorbestimmter Änderung erfolgt. Dies kann mittels eines erfassten zeitlichen Verlaufs des Leistungsbedarfs der Antriebstrommel oder mittels einer Steigung des Leistungsbedarfs der Antriebstrommel erfolgen. Als Reaktion hierauf kann ein Anhalten 500 der Antriebstrommel 12 erfolgen, um weitere Beschädigungen zu verhindern sowie um die Förderbandanlage 1 auf Beschädigungen kontrollieren zu können.

### Bezugszeichenliste (Teil der Beschreibung)

- A: Förderrichtung; Laufrichtung; Bewegungsrichtung

- 1: Förderbandanlage
- 10: Förderband
- 10a: Obertrum des Förderbands 13
- 10b: Untertrum des Förderbands 13
- 11: Zugträger; Festigkeitsträger; Stahlseile; Gewebe
- 12: Antriebstrommel
- 13: Stützrollen
- 14: Steuerungseinheit
- 15: Beladungssensor

- 100: Erfassen eines Leistungsbedarfs der Antriebstrommel 12
- 200: Erfassen einer Beladung des Förderbandes 10
- 300: Ermitteln Änderung des aktuellen Leistungsbedarfs der Antriebstrommel 12 über vorbestimmte unmittelbar zurückliegende Zeitdauer
- 400: Vergleichen der ermittelten Änderung des aktuellen Leistungsbedarfs der Antriebstrommel 12 mit vorbestimmter Änderung
- 500: Anhalten der Antriebstrommel 12

## Patentansprüche

1. Verfahren zum Betrieb einer Förderbandanlage (1)
mit einem Förderband (10), welches ein elastomeres Material aufweist, in welches wenigstens in einer Förderrichtung (A) verlaufende Zugträger (11) eingebettet sind, und
mit wenigstens einer Antriebstrommel (12), welche ausgebildet ist, das Förderband (10) in der Förderrichtung (A) anzutreiben,
mit wenigstens den Schritten:
• Erfassen (100) eines Leistungsbedarfs der Antriebstrommel (12),
• Ermitteln (300b) einer Änderung des aktuellen Leistungsbedarfs der Antriebstrommel (12) über eine vorbestimmte unmittelbar zurückliegende Zeitdauer,
• Vergleichen (400b) der ermittelten Änderung des aktuellen Leistungsbedarfs der Antriebstrommel (12) mit einer vorbestimmten Änderung und
• bei Überschreiten eines vorbestimmten Schwellwerts, Anhalten (500) der Antriebstrommel (12).

2. Verfahren nach Anspruch 1, **dadurch gekennzeichnet, dass** das Ermitteln (300b) einer Änderung des aktuellen Leistungsbedarfs der Antriebstrommel (12) aus einem erfassten zeitlichen Verlauf des Leistungsbedarfs der Antriebstrommel (12) erfolgt.

3. Verfahren nach Anspruch 1, **dadurch gekennzeichnet, dass** das Ermitteln (300b) einer Änderung des aktuellen Leistungsbedarfs der Antriebstrommel (12) als Steigung des Leistungsbedarfs der Antriebstrommel (12) erfolgt.

4. Verfahren nach einem der vorangehenden Ansprüche, **dadurch gekennzeichnet, dass**
die Zugträger (11) ein textiles Material aufweisen, vorzugsweise aus einem textilen Material bestehen.

5. Förderbandanlage (1)
mit einem Förderband (10), welches ein elastomeres Material aufweist, in welches wenigstens in einer Förderrichtung (A) verlaufende Festigkeitsträger eingebettet sind, und
mit wenigstens einer Antriebstrommel (12), welche ausgebildet ist, das Förderband (10) in der Förderrichtung (A) anzutreiben,
wobei die Förderbandanlage (1), vorzugsweise eine Steuerungseinheit (14) der Förderbandanlage (1), ausgebildet ist:
• einen Leistungsbedarf der Antriebstrommel (12) zu erfassen,
• eine Änderung des aktuellen Leistungsbedarfs der Antriebstrommel (12) über eine vorbestimmte unmittelbar zurückliegende Zeitdauer zu ermitteln,
• die ermittelte Änderung des aktuellen Leistungsbedarfs der Antriebstrommel (12) mit einer vorbestimmten Änderung zu vergleichen und
• bei Überschreiten eines vorbestimmten Schwellwerts die Antriebstrommel (12) anzuhalten.

6. Steuerungseinheit (14) zur Durchführung eines Verfahrens nach einem der Ansprüche 1 bis 4.
